Europäisches Patentamt

European Patent Office

Office européen des brevets

(11) Veröffentlichungsnummer: **0 313 883 B1**

(12) **EUROPÄISCHE PATENTSCHRIFT**

(45) Veröffentlichungstag der Patentschrift: **04.03.92**

(21) Anmeldenummer: **88116436.2**

(22) Anmeldetag: **05.10.88**

(51) Int. Cl.⁵: **F25J 3/00**, C01B 3/50

(54) **Verfahren zur Wasserstoff-Kohlenmonoxid-Zerlegung mittels partieller Kondensation bei tiefer Temperatur.**

(30) Priorität: **27.10.87 DE 3736354**

(43) Veröffentlichungstag der Anmeldung:
**03.05.89 Patentblatt 89/18**

(45) Bekanntmachung des Hinweises auf die
Patenterteilung:
**04.03.92 Patentblatt 92/10**

(84) Benannte Vertragsstaaten:
**BE DE FR GB NL**

(56) Entgegenhaltungen:
**EP-A- 0 092 770**
**EP-A- 0 119 001**
**GB-A- 1 304 568**
**US-A- 3 095 294**
**US-A- 4 525 187**

**LINDE-BERICHTE AUS TECHNIK UND WIS-
SENSCHAFT, Band 55, 1984, Seiten 38-42; R.
FABIAN: "Derzeitiger Stand der
H2-CO-Zerlegung mittels Tieftemperaturtechnik"**

(73) Patentinhaber: **Linde Aktiengesellschaft
Abraham-Lincoln-Strasse 21
W-6200 Wiesbaden(DE)**

(72) Erfinder: **Bauer, Heinz, Dr. rer. nat.
Nibelungenstrasse 6
W-8000 München 19(DE)**

(74) Vertreter: **Schaefer, Gerhard, Dr.
Linde Aktiengesellschaft Zentrale Patentabteilung
W-8023 Höllriegelskreuth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Zerlegung von $H_2$ und CO enthaltenden Gasgemischen mittels partieller Kondensation und anschließender Rektifikation bei tiefer Temperatur, bei dem das mittels partieller Kondensation gebildete Kondensat in eine Trennsäule entspannt wird, aus deren Sumpf eine flüssige methanreiche Fraktion, aus deren Kopf eine gasförmige Wasserstoff-Restgasfraktion und aus deren mittlerem Bereich eine flüssige Kohlenmonoxid-Produktfraktion abgezogen werden, wobei der Abzug der flüssigen Kohlenmonoxid-Produktfraktion mindestens einen theoretischen Boden unter dem Abzug der Wasserstoff-Restgasfraktion liegt, in einem Bereich, in dem die Kohlenmonoxid-Produktfraktion um den K-Wert des Wasserstoffs weniger Wasserstoff enthält als die Zuspeisung zur Trennsäule.

Die Zerlegung eines $H_2$, CO und $CH_4$ enthaltenden Rohgases, wie es z.B. im Steam Reforming Prozeß gewonnen wird, mittels Tieftemperaturtechnik in einen $H_2$-reichen und einen CO-reichen Strom wird, je nach den Anforderungen in Bezug auf Produktreinheit und/oder Ausbeute, auf unterschiedliche Art und Weise durchgeführt. Gemeinsam ist allen Verfahrensvarianten die partielle Kondensation des Rohgases zur weitgehenden Abtrennung des Kohlenmonoxids und Gewinnung des Wasserstoffs.

In einem bekannten Verfahren, dargelegt in "Linde-Berichte aus Technik und Wissenschaft", Heft 55, 1984, Seiten 38 bis 42, wird das Rohgas partiell kondensiert. Die in einem Abscheider anfallende gasförmige Fraktion wird als $H_2$-Produkt, nach weiterer Verwendung als Wärmetauschmedium, abgezogen. Die flüssig anfallende Fraktion, bestehend aus $CH_4$, CO und $H_2$, wird in einem beheizten Abscheider entspannt. Die nunmehr anfallende Sumpffraktion enthält im wesentlichen nur noch $CH_4$ und CO. Sie wird in eine CO/$CH_4$-Trennsäule entspannt, an deren Kopf die gasförmige CO-Fraktion als Produkt abgezogen wird. Das Sumpfprodukt der CO/$CH_4$-Trennsäule ($CH_4$) sowie das Kopfprodukt des zweiten Abscheiders ($H_2$) wird als Heizgas abgeführt. Die zur Trennung notwendige Kopfkühlung der CO/$CH_4$-Trennsäule und des beheizten Abscheiders wird durch indirekten Wärmetausch mit einem Teil des verflüssigten $H_2$-Produktes des ersten Abscheiders als Kühlmedium durchgeführt. Der besondere Nachteil dieses Verfahrens liegt in der geringen CO-Ausbeute und vergleichsweise geringen $H_2$-Produktreinheit bei einem Prozeßdruck von 33 bar. So verbleiben im gasförmigen Wasserstoff ca. 1,5 bis 2 mol-% CO, und da durch die weitere Abtrennung von $H_2$ und $CH_4$ ebenfalls CO verloren geht, liegt die CO-Ausbeute lediglich knapp über 90 %.

Ein weiteres, verbessertes in obengenannter Veröffentlichung beschriebenes Verfahren arbeitet in ähnlicher Weise. Ein Rohgasstrom wird in zwei Stufen partiell kondensiert und das im zweiten Abscheider anfallende gasförmige $H_2$-Produkt abgeführt. Die in beiden Abscheidern anfallenden flüssigen Fraktionen werden in einen beheizten $H_2$-Stripper geleitet. Das Sumpfprodukt dieses Strippers, welches hauptsächlich $CH_4$ und CO enthält, wird in eine CO/$CH_4$-Trennsäule entspannt, an deren Kopf das gasförmige CO-Produkt abgezogen wird. Ein Teil des CO-Produkts dient nach der Verdichtung als Heizmedium für den $H_2$-Stripper und wird anschließend als Rücklauf auf die CO/$CH_4$-Trennsäule aufgegeben. Das Sumpfprodukt der CO/$CH_4$-Trennsäule ($CH_4$) wird als Heizgas abgezogen, das Kopfprodukt des $H_2$-Strippers ($H_2$ und CO) wird erneut in den Prozeß zurückgeführt. Gegenüber erstgenanntem Verfahren wird zwar eine wesentlich reinere CO-Produktfraktion gewonnen, doch ist dazu ein aufwendiger $H_2$-Stripper vonnöten.

Ein gattungsgemäßes Verfahren ist in der US-PS 3 095 294 beschrieben. Hierbei handelt es sich um ein Verfahren zur Zerlegung von $H_2$ und CO enthaltenden Gasgemischen mittels partieller Kondensation und anschließender Rektifikation bei tiefer Temperatur.

Das Rohgas wird bei diesem bekannten Verfahren verflüssigt in den unteren Teil einer Trennsäule eingespeist, aus deren Sumpf eine flüssige Methanfraktion, aus deren Kopf eine gasförmige Wasserstoff-Restgasfraktion und aus deren mittlerem Bereich eine flüssige Kohlenmonoxid-Produktfraktion abgezogen werden. Jedoch sind bei diesem Verfahren noch mehrere zusätzliche Separatoren notwendig, um eine der vorliegenden Erfindung entsprechende CO-Produktreinheit zu erhalten.

Die vorliegende Erfindung befaßt sich mit der Aufgabe, ein $H_2$/CO-Zerlegungsverfahren eingangs genannter Art zu schaffen, welches bei geringstmöglichem materiellem Aufwand hohe Produktreinheiten zu liefern imstande ist.

Die Lösung dieser Aufgabe wird dadurch erreicht, daß ein Teil der abgezogenen flüssigen Kohlenmonoxid-Produktfraktion entspannt und unterhalb der Abzugsstelle der Trennsäule wieder als Rücklauf zugeführt wird.

Zur Durchführung des erfindungsgemäßen Verfahrens kommt eine zweigeteilte Trennsäule zum Einsatz, deren oberer Bereich die prinzipielle Arbeitsfunktion eines $H_2$-Strippers und deren unterer Bereich die prinzipielle Arbeitsfunktion einer CO/$CH_4$-Trennsäule hat. Beide Bereiche der Trennsäule sind durch geeignete Maßnahmen, z.B. einen Kaminboden oder eine Flüssigkeitsabzugstasse, miteinander verbunden. Diese Maßnahmen erleichtern den Abzug der flüssigen CO-Produktfraktion.

Der Kopf der Trennsäule wird dabei durch indirekten Wärmetausch gekühlt. Hierzu ist im Kopf des oberen Bereichs der Trennsäule ein Wärmetauscher angeordnet.

Die Kopfkühlung bewirkt die Kondensation des Kohlenmonoxids aus dem $H_2$/CO-Gemisch am Kopf der Trennsäule und ermöglicht dadurch die Trennung in eine $H_2$-reiche, gasförmige Kopffraktion und eine reine, flüssige CO-Produktfraktion.

Als Kühlmedium dient die CO-Produktfraktion. Ein Teil der aus dem mittleren Bereich abgezogenen, flüssigen CO-Produktfraktion wird hierzu in den Wärmetauscher im Kopf der Trennsäule entspannt.

Erfindungsgemäß wird der Rücklauf auf den unteren Bereich, in dem prinzipiell die CO/$CH_4$-Trennung stattfindet, aufgegeben. Der hierdurch und durch die obenerwähnte Kopfkühlung erreichbare $H_2$-Gehalt von 1 bis 100 Vppm in der CO-Produktfraktion macht den $H_2$-Separator der bekannten Verfahren überflüssig.

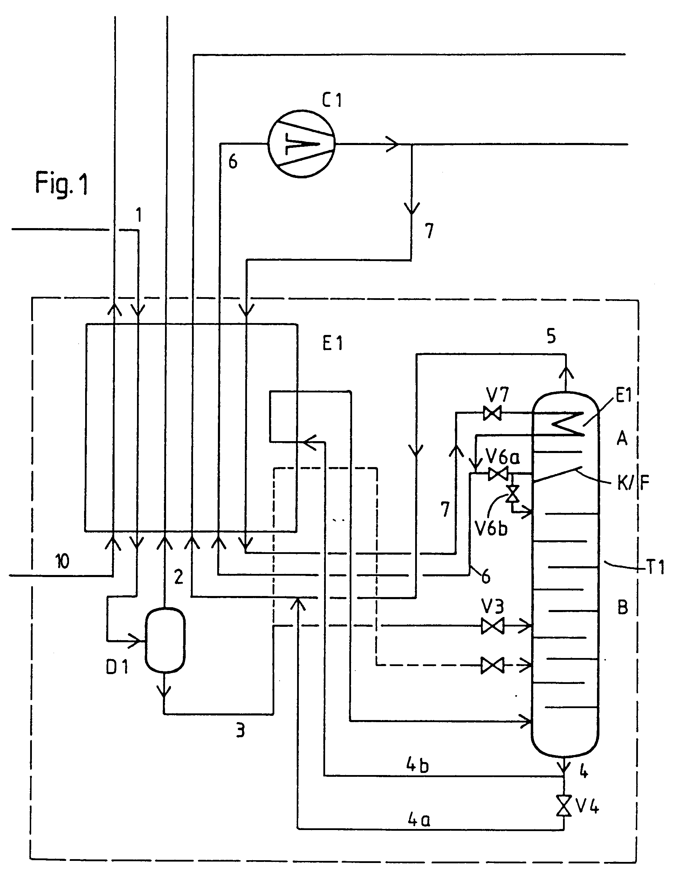

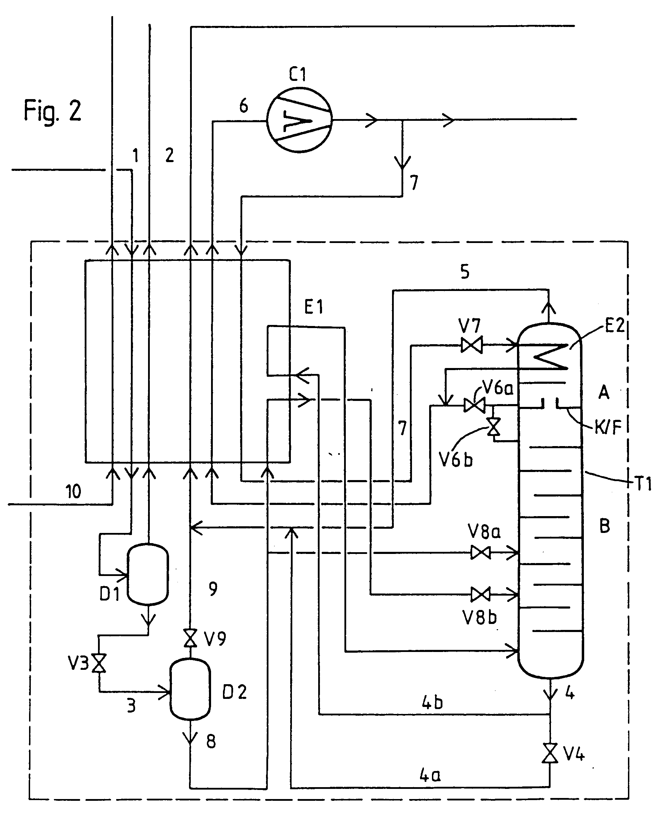

Anhand der Figuren 1 und 2 sei im folgenden die prinzipielle Arbeitsweise des erfindungsgemäßen Verfahrens erläutert. Hierbei werden die nachstehenden Abkürzungen verwendet.

Leitungen:                           1 bis 10
Wärmetauscher:                    E1, E2
Abscheider:              D1, D2
Ventile:            V1 bis V9
Trennsäule:              T1 (unter Bereich B; oberer Bereich A)
Verdichter:              C1
Kaminboden/Flüssigkeitsabzugstasse:              K/F

Figur 1 zeigt eine Anlage, welche eine generelle Ausführungsform darstellt. Ein von Verunreinigungen, z.B. durch Adsorptionstechnik, befreiter Rohgasstrom 1, der Wasserstoff ($H_2$), Kohlenmonoxid (CO) und Methan ($CH_4$) enthält, wird in einem Wärmetauscher E1 abgekühlt und partiell kondensiert. Die in einem Abscheider D1 anfallende gasförmige $H_2$-Fraktion wird als Produkt 2 abgeführt. Die flüssige Fraktion, $CH_4$, CO und geringe Mengen $H_2$ enthaltend, wird über eine Leitung 3 abgezogen und in den unteren Bereich B der Trennsäule T1 entspannt V3. Im Sumpf von T1 bildet sich eine flüssige, $CH_4$-reiche Fraktion, darüber entsteht ein $H_2$/CO-reiches Gasgemisch. Das $CH_4$-Sumpfprodukt wird über eine sich gabelnde Leitung 4 abgezogen. Ein Teil 4b wird nach Erwärmung in E1 dem Sumpf von T1 wieder aufgegeben, der andere Teil wird entspannt V4 und abgezogen 4a, im Wärmetauscher E1 mit abzukühlenden Verfahrensströmen angewärmt und verläßt die Anlage als sogenannter Flare. Das sich in B bildende $H_2$/CO-Gemisch gelangt durch einen Kaminboden, oder über eine Flüssigkeitsabzugstasse, in den oberen Bereich A von T1. An dem dort, im Kopf der Trennsäule, befindlichen Wärmetauscher E2 wird das CO auskondensiert. Über den Kaminboden bzw. die Flüssigkeitsabzugstasse K/F wird das flüssige CO-Produkt abgezogen 6. Ein kleiner Teil davon wird entspannt V6b und als Rücklauf auf den oberen Bereich des Teiles B der Trennsäule aufgegeben. Der größte Teil wird nach der Entspannung V6a gegen abzukühlende Verfahrensströme angewärmt und verläßt nach Verdichtung C1 als hochreines CO-Produkt die Anlage. Erfindungsgemäß wird nach der Kompression C1 ein Teilstrom des CO-Produkts abgezweigt 7, abgekühlt E1 und liefert entspannt V7 in den Kopfwärmetauscher, die zur Kondensation des CO aus dem $H_2$/CO-Gemisch notwendige Kopfkälte. Über Kopf wird aus dem Bereich A der Trennsäule ein nahezu von CO befreiter $H_2$-Strom abgezogen 5, welcher zusammengeführt mit dem entspannten Sumpfprodukt 4a die Anlage verläßt. Über Leitung 10 wird zur Deckung des Kältebedarfs Stickstoff herangeführt

Figur 2 zeigt eine Anordnung, mit der eine Betriebsweise ähnlich wie in Figur 1 möglich ist. Im Unterschied zu Figur 1 ist ein weiterer Abscheider D2 vorhanden. Die flüssige Fraktion 3 wird nun nicht mehr direkt in die Trennsäule T1 entspannt, sondern auf einen Zwischendruck in den weiteren Abscheider. Die in D2 anfallende gasförmige Fraktion 9 wird auf Trennsäulendruck entspannt V9 und über E1 als Flare abgezogen. Die flüssige Fraktion 8 wird in den unteren Bereich B der Trennsäule entspannt V8. Sie kann, wie aus Figur 2 ersichtlich, zuvor in zwei Teilströme gespalten werden, von denen der eine direkt in T1 entspannt V8a und der andere, nach Durchlaufen des Wärmetauschers E1 und der damit verbundenen Anwärmung gegen abzukühlende Verfahrensströme unterhalb der Einspeisung des ersten Teilstromes in T1 entspannt V8b wird. Das übrige Verfahren wird in Analogie zu dem am Beispiel der Figur 1 beschriebenen durchgeführt.

Die Entspannung der gasförmigen Fraktion 9 wird hier durchgeführt, um die Verfahrensströme 4a, 5 und 9 gemeinsam abführen zu können, da die Trennsäule auf einem niedrigeren Druckniveau betrieben wird als die partielle Kondensation in D2.

Analog zu der Aufteilung des Flüssigkeitsstroms 8, dessen Führung und getrennte Einspeisung in Figur 2, kann der Flüsigkeitsstrom 3 der Figur 1 behandelt werden. Dies ist in Figur 1 durch die durchbrochene Linie angedeutet.

Im folgenden wird, anhand der im erfindungsgemäßen Verfahren auftretenden Gaszusammensetzungen die Effizienz des Verfahrens gezeigt. Hierzu sind die Angaben zu den einzelnen Strömen in tabellarischer Form aufgelistet. Das erfindungsgemäße Verfahren, wie in Hand Figur 1 beschrieben, ist in Tabelle 1 vertreten. Die Werte der Tabelle 2 lieferte ein Verfahren wie an Hand von Figur 2 erläutert. Ebenfalls aufgelistet sind die zu jeder wichtigen Stelle im Verfahren entsprechenden Drücke.

Tabelle 1

| (Verfahren Figur 1) Angaben in Mol-% | | | | | | |
|---|---|---|---|---|---|---|
| Strom | 1 | 2 | 3 | 4 | 5 | 6 (7) |
| $H_2$ | 49.6 | 93.0 | 3.8 | 0 | 8.0 | 150 vppm |
| CO | 50.1 | 6.9 | 95.6 | 30.0 | 92.0 | 99.9 |
| $CH_4$ | 0.3 | 40 vppm | 0.6 | 70.0 | 0 | 1 vppm |
| p(1) = 20 bar abs  P(T1) = 1.7 bar abs. | | | | | | |

Tabelle 2

| (Verfahren Figur 2) Angaben in Mol-% | | | | | | | | |
|---|---|---|---|---|---|---|---|---|
| Strom | 1 | 2 | 3 | 4 | 5 | 6(7) | 8 | 9 |
| $H_2$ | 49.6 | 93.0 | 3.8 | 0 | 8.0 | 12 vppm | 0.4 | 67.0 |
| CO | 50.1 | 6.9 | 95.6 | 30.0 | 92.0 | 99.9 | 98.9 | 33.0 |
| $CH_4$ | 0.3 | 40 vppm | 0.6 | 70.0 | 0 | 1 vppm | 0.7 | 150 vppm |
| p(1) = 20 bar abs  p(D2) = 2.5 bar abs  P(T1) = 1.7 bar abs (Bereich 2.5 - 1.3 bar) | | | | | | | | |

**Patentansprüche**

1. Verfahren zur Zerlegung von $H_2$ und CO enthaltenden Gasgemischen mittels partieller Kondensation und anschließender Rektifikation bei tiefer Temperatur, bei dem das mittels partieller Kondensation gebildete Kondensat in eine Trennsäule entspannt wird, aus deren Sumpf eine flüssige methanreiche Fraktion, aus deren Kopf eine gasförmige Wasserstoff-Restgasfraktion und aus deren mittlerem Bereich eine flüssige Kohlenmonoxid-Produktfraktion abgezogen werden, wobei der Abzug der flüssigen Kohlenmonoxid-Produktfraktion mindestens einen theoretischen Boden unter dem Abzug der Wasserstoff-Restgasfraktion liegt, in einem Bereich, in dem die Kohlenmonoxid-Produktfraktion um den K-Wert des Wasserstoffs weniger Wasserstoff enthält als die Zuspeisung zur Trennsäule, dadurch gekennzeichnet, daß ein Teil der abgezogenen flüssigen Kohlenmonoxid-Produktfraktion entspannt und unterhalb der Abzugsstelle der Trennsäule wieder als Rücklauf zugeführt wird.

**Claims**

1. A process for separating gas mixtures containing $H_2$ and CO by partial condensation and subsequent rectification at a low temperature, wherein the condensate which has been formed by partial condensation is expanded into a separating column, from the sump of which a liquid, methane-rich fraction is discharged, from the head of which a gaseous hydrogen - residual gas fraction is discharged, and from the central zone of which a liquid carbon monoxide product fraction is discharged, wherein the discharge of the liquid carbon monoxide product fraction takes place at least one theoretical plate below the discharge of the hydrogen - residual gas fraction, in a zone in which the carbon monoxide product fraction contains a smaller quantity of hydrogen, which quantity corresponds to the K-value of the hydrogen, than the supply to the separating column, characterised in that a part of the discharged, liquid carbon monoxide product fraction is expanded and returned to the separating column as reflux stream at a location below the discharge point.

4

**Revendications**

1. Un procédé de séparation de mélanges gazeux contenant $H_2$ et CO au moyen d'une condensation partielle suivie d'une rectification à basse température, procédé dans lequel le condensat formé par condensation partielle est détendu dans une colonne de séparation en cuve de laquelle on prélève une fraction liquide riche en méthane, en tête de laquelle on prélève une fraction résiduaire d'hydrogène gazeux et dans la partie moyenne de laquelle on prélève une fraction d'oxyde de carbone liquide à titre de produit, le prélèvement de la fraction d'oxyde de carbone liquide produit ayant lieu au moins à un plateau théorique en-dessous du prélèvement de la fraction gazeuse résiduaire d'hydrogène, dans une zone dans laquelle la fraction de monoxyde de carbone contient moins d'hydrogène que le mélange introduit dans la colonne de séparation, la différence correspondant à la valeur K de l'hydrogène, caractérisé en ce qu'une partie de la fraction liquide de monoxyde de carbone obtenue comme produit est détendue et réintroduite comme fluide de reflux en-dessous de son point de prélèvement dans la colonne de séparation.

Fig. 1

Fig. 2